# EUROPEAN PATENT SPECIFICATION

(11) **EP 2 613 322 B1**
(45) Date of publication and mention of the grant of the patent: **12.07.2017**
(21) Application number: 12305021.3
(22) Date of filing: 06.01.2012
(51) Int. Cl.: G21C 3/33

(54) **Fuel assembly for a BWR with releasable fasteners between the transition piece and the bottom end-piece**
Brennelement für einen SWR mit lösbaren Befestigungsmitteln zwischen Boden und Übergangstück
Ensemble de combustible pour BWR avec fixations amovibles entre la pièce de transition et l'embout inférieur

(43) Date of publication of application: 10.07.2013
(73) Proprietor: AREVA NP, 92400 Courbevoie (FR)
(72) Inventor: Schaefer, Jens, 91052 Erlangen (DE); Kronenberg, Juris, 91056 Erlangen (DE); Friedrich, Erhard, 90542 Eckental (DE); Blavius, Dirk, 91058 Erlangen (DE)
(74) Representative: Lavoix

(56) References cited:
- EP-A1- 1 280 163
- US-A- 5 128 096

## Description

The present invention concerns a nuclear fuel assembly for a nuclear boiling water reactor comprising :
- a bottom end-piece, a top end-piece, a bundle of fuel rods extending along a longitudinal direction between the bottom end-piece and the top end-piece ;
- a fuel channel surrounding the bundle of fuel rods ; and
- a transition piece extending the fuel channel longitudinally downwardly for resting on a lower core plate of the nuclear boiling water reactor.

US 5,727,040 discloses a fuel assembly for a boiling water reactor (BWR) in which the bottom end-piece is seated on the transition piece by means of support feet which project downwards from a bottom surface of the bottom end-piece and rest freely on a top edge of the transition piece.

Such a fuel assembly is not entirely satisfactory. Indeed, in boiling water nuclear reactors, the coolant flowing upwards from the lower core plate through the fuel assembly exerts an upward force on the bottom end-piece. Under certain conditions, e.g. uprated core-power and/or core mass flow conditions, this upward force may induce a lift-off of the bottom end-piece from the transition piece.

EP 1 280 163 discloses a method for adjusting the flow resistance of a fuel assembly for a boiling water reactor, the fuel assembly comprising a foot and a centering cone arranged at a bottom end thereof.

US 5,128,096 discloses a lower connector of a fuel assembly having a filter for the retention of particles contained in the cooling fluid of a nuclear reactor.

One purpose of the invention is to prevent a lifting off of the bottom end-piece from the transition piece.

To that end, the invention relates to a nuclear fuel assembly according to claim 1.

According to specific embodiments, the nuclear fuel assembly may comprise one or several of the features of the dependant claims 2 to 10. The invention also relates to a transition piece according to claim 11. The invention and its advantages will be better understood upon reading the following description, given solely by way of example and with reference to the appended drawings, in which:
- Fig. 1 is a schematic view of a BWR nuclear fuel assembly according to the invention;
- Fig. 2 is a schematic exploded lateral view of the bottom end-piece and the transition piece of the nuclear fuel assembly of Fig. 1;
- Fig. 3 is a schematic bottom view of the bottom end-piece of the nuclear fuel assembly of Fig. 1;
- Fig. 4 is an enlarged view of detail D of Fig. 2 according to a first embodiment of the invention with the transition piece assembled to the bottom end-piece;
- Fig. 5 is a schematic perspective view of the clamp of Fig. 4; and
- Fig. 6 is a schematic view of a clamp according to a second embodiment.

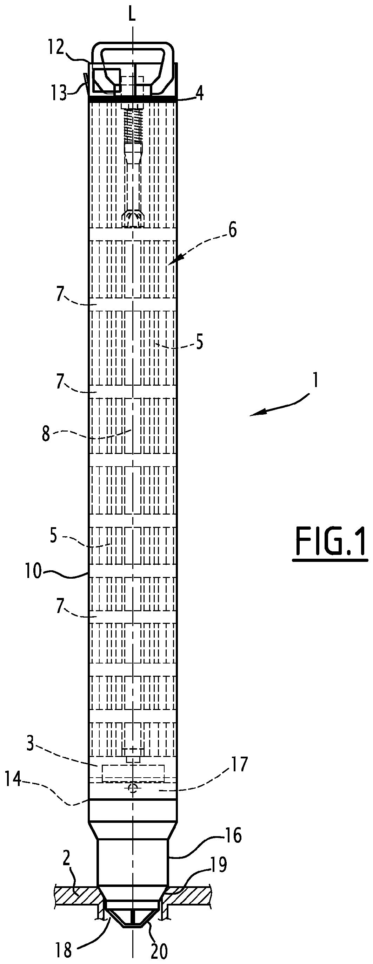

Fig. 1 shows a nuclear fuel assembly 1 for a boiling water reactor (BWR). The fuel assembly 1 extends along a vertical longitudinal direction L. Such a fuel assembly 1 is intended to be placed in a core of a nuclear reactor where coolant flows upwardly during operation of the nuclear reactor. It is in particular intended to be positioned on a lower core plate 2 of the BWR.

The fuel assembly 1 comprises a bundle unit 6 comprising a bottom end-piece 3, a top end-piece 4 spaced from the bottom end-piece 3 along the longitudinal direction L, a bundle of fuel rods 5 extending longitudinally between the bottom end-piece 3 and the top end-piece 4 and a plurality of spacer grids 7 spaced apart along the longitudinal direction L and maintaining the bundle of fuel rods 5 longitudinally and transversally. A water channel 8 is placed inside the bundle of fuel rods 5 and connects the bottom end-piece 3 to the top end-piece 4.

A fuel channel 10 surrounds the bundle of fuel rods 5. It is open at its top and bottom ends 12, 14. The fuel channel 10 is extended longitudinally downwardly by a transition piece 16 intended for guiding the coolant from the lower core plate 2 into the nuclear fuel assembly 1. The transition piece 16 is attached to the bottom end 14 of the fuel channel 10, e.g. by screwing. In particular, it is permanently attached to the fuel channel 10, e.g. by destruction of the screw threads after the transition piece 16 has been screwed to the fuel channel 10. The transition piece 16 and the fuel channel 10 form a basket-like unit that receives the bundle unit 6. The bundle unit 6 is inserted into this basket-like unit from the top end 14 of the fuel channel 10. The fuel assembly 1 has a "bundle in basket" design.

More particularly, the transition piece 16 has a top end 17 that fits into the open bottom end 14 of the fuel channel 10. A bottom end 19 of the transition piece 16 fits sealingly into an opening 18 in the lower core plate 2 intended for the passage of coolant. The transition piece 16 further comprises an intermediate portion between its top end 17 and its bottom end 19. The cross-section of this intermediate portion may be widened between the bottom end 19 and the top end 17 of the transition piece 16.

In one example, the fuel channel 10 has a substantially square cross-section and the opening 18 in the lower core plate 2 has a substantially circular cross-section. In this embodiment, the top end 17 of the transition piece 16 has a substantially rectangular cross-section adapted to that of the fuel channel 10 and the bottom end 19 of the transition piece 16 has a substantially circular cross-section adapted to that of the opening 18.

The transition piece 16 further comprises a centering and positioning device 20 for centering and positioning the transition piece 16 in the opening 18 of the lower core plate 2. The centering and positioning device 20 projects below the bottom end 19 of the transition piece 16 and extends into the opening 18 of the lower core plate 2. In the arrangement shown in Fig. 1, the centering and positioning device 20 comprises fingers which are angularly distributed about the circumference of the bottom end 19 of the transition piece 16 and each extend towards the longitudinal axis of the nuclear fuel assembly 1 in a star-like manner.

The fuel assembly 1 further comprises leaf springs 13 between the top end-piece 4 and the fuel channel 10 for laterally centering the top end-piece 4 in the fuel channel 10. The friction exerted on the fuel channel 10 by the leaf springs 13 helps act against the lift-off force exerted by the coolant on the bundle unit 6.

According to the invention, the bottom end-piece 3 is releasably attached to the transition piece 16. For that purpose, the bottom end-piece 3 and the transition piece 16 comprise releasable complementary fasteners. These fasteners cooperate with each other in order to releasably fasten the bottom end-piece 3 to the transition piece 16. "Releasably" means that the bottom end-piece 3 can be detached from the transition piece 16 without damaging either one of these elements 3, 16. Advantageously, the bottom end-piece 3 is detachable from the transition piece 16 without having to access the junction area between the bottom end-piece 3 and the transition piece 16, for example simply by pulling the bottom end-piece 3 away from the transition piece 16 along the longitudinal direction L.

The bottom end-piece 3 is e.g. fastened to the transition piece 16 only through the releasable complementary fastening means.

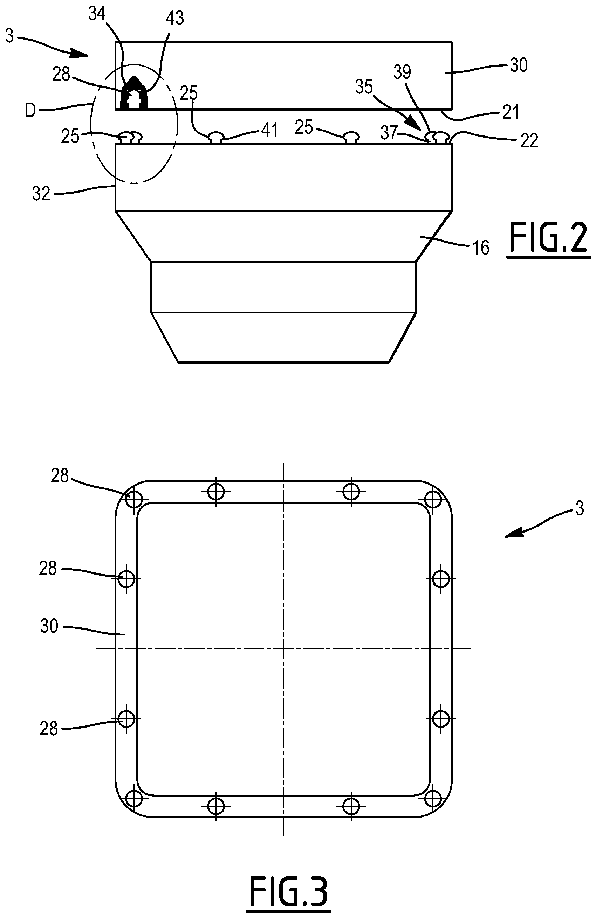

As illustrated in Figs. 2 and 3, the releasable complementary fasteners are provided on opposite faces of the bottom end-piece 3 and the transition piece 16. These opposite faces face each other when the bottom end-piece 3 is fastened to the transition piece 16. In particular, they are provided on a bottom surface 21 of the bottom end-piece 3 and on a top surface 22 of the transition piece 16.

The releasable complementary fasteners comprise male fasteners 25 provided on at least one of the bottom end-piece 3 and the transition piece 16 and female fasteners 28 provided respectively on the other one of the bottom end-piece 3 and the transition piece 16. Each male fastener 25 engages with a corresponding female fastener 28.

In the illustrated embodiment, the male and female fasteners 25, 28 are provided in corresponding positions respectively on the bottom end-piece 3 and the transition piece 16, i.e. in positions that are facing each other in the fuel assembly 1.

As illustrated in Figs. 2 and 3, the bottom end-piece 3 comprises an outer frame 30, which is, for example of square shape. Classically, this outer frame 30 receives a grid-like structure comprising reception cells for receiving the fuel rods 5 and the water channel 8 of the fuel assembly 1. This grid-like structure is not shown on Fig. 2 for simplification purposes. In the nuclear fuel assembly 1, the outer frame 30 of the bottom end-piece 3 rests upon a top peripheral rim 32 of the transition piece 16. In the embodiment shown, the female fasteners 28 are distributed on the outer frame 30 of the bottom end-piece 3, and in particular over the bottom surface 21 of the outer frame 30, and the male fasteners 25 are arranged in corresponding positions on the top peripheral rim 32 of the transition piece 16, and in particular on the top surface 22 of the top peripheral rim 32. The male and female fasteners 25, 28 are in particular distributed regularly respectively over the top surface 22 of the top peripheral rim 32 and the bottom surface 21 of the outer frame 30.

In the embodiment shown, the bottom end-piece 3 comprises one female fastener 28 in each corner of the outer frame 30 and two female fasteners 28 on each side of the outer frame 30. The transition piece 16 comprises a corresponding number of male fasteners 25. The number and the position of the fasteners are not limitative and may vary. The bottom end-piece 3 and the transition piece 16 comprise any number of fasteners allowing an adequate fastening of the bottom end-piece 3 to the transition piece 16.

All male and respectively all female fasteners 25, 28 have generally similar shapes. Therefore, only one male fastener 25 and the corresponding female fastener 28 will be described hereinafter.

The female fastener 28 automatically engages with the corresponding male fastener 25 when the transition piece 16 and the bottom end-piece 3 move one towards the other along the longitudinal direction L during assembling of the nuclear fuel assembly 1.

According to a particular embodiment, the female fastener 28 comprises a clamp 34, which engages with the male fastener 25 by snap-fitting.

In the embodiment shown in Fig. 2, the male fastener 25 is formed by a fastening pin 35, which projects upwardly from the top surface 22 of the transition piece 16. The fastening pin 35 extends along a direction parallel to the longitudinal direction L. It comprises a shank 37 extended upwardly by a head 39. A retaining shoulder 41 is provided on the fastening pin 35 at the junction between the shank 37 and the head 39. The cross-section of the head 39 is greater than the diameter of the shank 37. The shank 37 is for example cylindrical. The head 39 is for example rounded. In the embodiment shown, the fastening pin 35 has a shape similar to that of a rivet with a rounded head.

The fastening pin 35 is for example cast in one piece with the transition piece 16. In another embodiment, it is fixed to the transition piece 16, for example by welding and/or by screwing, using a threaded shank 37.

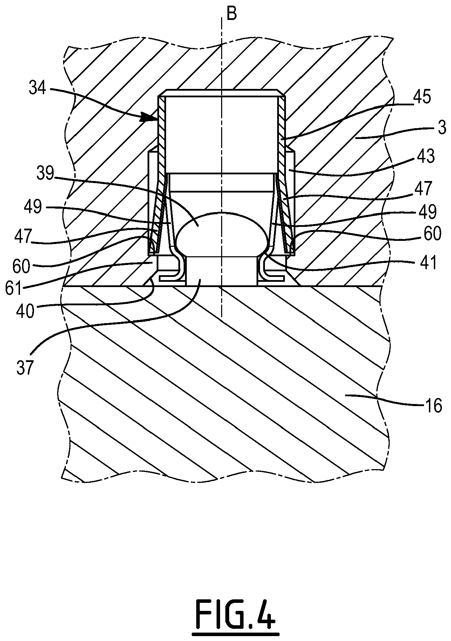

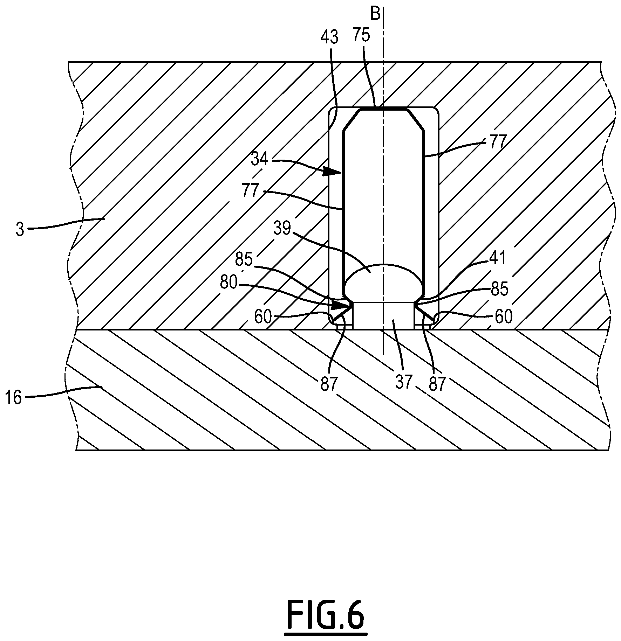

The clamp 34 is at least partially received in a housing 43 provided in the bottom end-piece 3. In the embodiments shown, the clamp 34 is embedded in the housing 43, i.e. entirely comprised in the housing 43. The housing 43 opens downwardly, i.e. towards the transition piece 16. It extends along an axis B parallel to the longitudinal direction L. In the example shown in Figs. 4 and 6, the housing 43 is a blind-hole formed in the bottom end-piece 3. In the embodiment shown in Fig. 4, the housing 43 further comprises, in its lower portion, an entry chamfer 40 of enlarged cross-section. The chamfer 40 serves to guide the fastening pin 35 into the respective clamp 34 and to correct potential slight misalignments between the fastening pins 35 and the clamps 34 during the lowering of the bottom end-piece 3 towards the transition piece 16.

The clamp 34 engages with the fastening pin 35 by snap-fitting. More particularly, the clamp 34 resiliently engages with the retaining shoulder 41. Thus, the bottom end-piece 3 is attached to the transition piece 16 by means of the complementary releasable fasteners. The bottom end-piece 3 is however detachable from the transition piece 16 by pulling the bundle unit 6 away from the transition piece 16 along the longitudinal direction L. Indeed, when sufficient pulling force is exerted onto the bundle unit 6, the resilient retaining force exerted by the clamp 34 on the fastening pin 35 is overcome and the fastening pin 35 snaps out of the clamp 34.

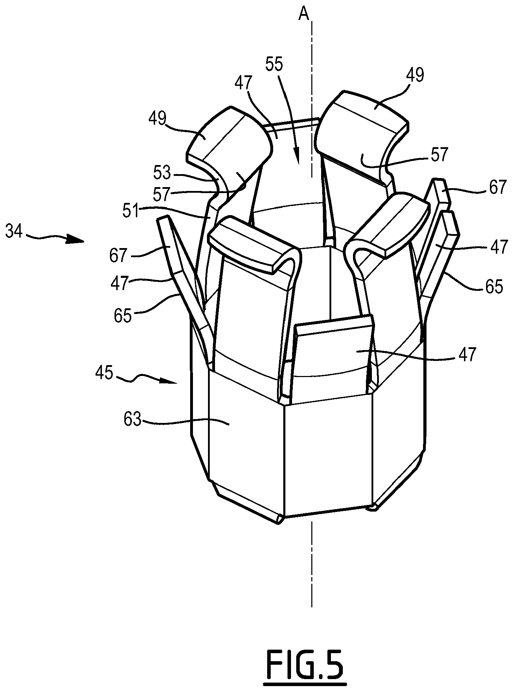

A first embodiment of the clamp 34 is shown in Figs. 4 and 5. It comprises a tubular hollow body 45, e.g. of circular cross-section or of polygonal, in particular octagonal, cross-section, having a longitudinal axis A. It further comprises snap-fitting tabs 47 and retaining tabs 49, which extend downwards from the body 45. The snap-fitting tabs 47 and the retaining tabs 49 alternate along the circumference of the body 45. The snap-fitting tabs 47 and the retaining tabs 49 are resilient lugs.

The clamp 34 snap-fittingly engages with the fastening pin 35 by means of the resilient retaining tabs 49. The retaining tabs 49 are spaced angularly about the longitudinal axis A of the clamp 34. In the illustrated embodiment, all the retaining tabs 49 are identical. The clamp 34 may e.g. comprise four retaining tabs 49. Each retaining tab 49 comprises a substantially planar portion 51 extending downwards from the body 45 and inwards, i.e. towards the longitudinal axis A of the clamp 34. The substantially planar portion 51 is extended downwardly by a curved portion 53 extending away from the longitudinal axis A. The curved portions 53 of the retaining tabs 49 jointly form a constriction on the clamp 34 that engages with the retaining shoulder 41 of the fastening pin 35. The constriction delimits a central opening 55, e.g. having an essentially discontinuous circumference, which, in a resting configuration of the retaining tabs 49, has a diameter that is smaller than that of the head 39 of the fastening pin 35. From the resting configuration, the retaining tabs 49 are elastically deformable radially outwards, under the effect of a force applied to an inner surface 57 of the curved portions 53. In one embodiment, the diameter of the opening 55 in the resting configuration is smaller than the diameter of the shank 37. This feature increases the friction between the fastening pin 35 and the retaining tabs 49, and therefore increases the clamping force of the clamp 34.

The elasticity of the retaining tabs 49 is adapted to allow an elastic radial deformation of the retaining tabs 49 away from their resting configuration when the fastening pin 35 is intentionally inserted into or extracted out of the clamp 34, and so as to prevent an outward deformation of the retaining tabs 49 merely under the effect of an upward force exerted by the flow of coolant onto the bottom end-piece 3 of the nuclear fuel assembly 1 during operation of the BWR.

The clamp 34 is snap-fitted into the housing 43. In the first embodiment, it is snap-fitted into the housing 43 by engagement of the snap-fitting tabs 47 with an internal shoulder 60 formed in the housing 43. The housing 43 comprises an annular rib 61 protruding radially inwards, i.e. towards the longitudinal axis B of the housing 43, from an internal wall of the housing 43. The internal shoulder 60 is formed on the annular rib 61. In the example shown, the snap-fitting tabs 47 are distributed angularly about the longitudinal axis A of the clamp 34. In a resting configuration, the snap-fitting tabs 47 extend outwards with respect to an outer peripheral surface 63 of the body 45. They are elastically deformable under the effect of a force applied to their outer surface 65 at least towards a configuration in which they are flush with the outer peripheral surface 63 of the body 45. All the snap-fitting tabs 47 may be identical. The clamp 34 may e.g. comprise four snap-fitting tabs 47, regularly spaced about the longitudinal axis A of the clamp 34.

During the insertion of the clamp 34 into the housing 43, the snap-fitting tabs 47 are elastically deformed inwards by the force exerted by the annular rib 61. As soon as the free ends 67 of the snap-fitting tabs 47 have passed the internal shoulder 60 of the housing 43, the snap-fitting tabs 47 deform elastically outwards towards their resting configuration. When the clamp 34 is snap-fitted in the housing 43, the free ends 67 of the snap-fitting tabs 47 engage with the internal shoulder 60 and longitudinally retain the clamp 34 in the housing 43.

Fig. 6 shows complementary releasable fasteners according to a second embodiment of the invention. The housing 43 is a recess provided in the bottom end-piece 3. It has a longitudinal axis B and opens downwardly in order to receive the respective fastening pin 35. It comprises the internal shoulder 60. The clamp 34 is received in the housing 43. It is embedded in the housing 43. It is substantially symmetrical with respect to the longitudinal axis B of the housing 43. It comprises a substantially flat top 75, extended downwardly by at least two legs 77, the legs 77 being arranged at symmetrical positions with respect to the longitudinal axis of the clamp 34. In the illustrated embodiment, the clamp 34 comprises two legs 77 and is substantially U-shaped. In the illustrated embodiment, the clamp 34 is a U-shaped spring. A constriction 80 is formed at the bottom end of the clamp 34 and is adapted to engage the retaining shoulder 41 of the respective fastening pin 35. The constriction 80 is formed by substantially V-shaped folds 85, provided in diametrically opposed locations on each of the legs 77 of the clamp 34. The constriction 80 automatically engages the retaining shoulder 41 of the fastening pin 35 as the bottom end-piece 3 is lowered onto the transition piece 16 during assembling of the nuclear fuel assembly 1. Thus, the legs 77 are in snap-fit engagement with the internal shoulder 60 of the housing 43. The clamp 34 forms with the retaining shoulder 41 a means for fastening by snap-fitting.

In the second embodiment, the clamp 34 comprises resilient free ends 87 which engage with the internal shoulder 60 of the housing 43 when the clamp 34 is received in the housing 43. Each of the free ends 87 is formed by one of the legs of the V-shaped folds 85. The free ends 87 are in snap-fit engagement with the internal shoulder 60 of the housing 43. They are pushed towards one another as the clamp 34 is introduced into the housing 43 and resiliently return to their resting position in which they engage with the internal shoulder 60 of the housing 43 as soon as they have passed this internal shoulder 60. The clamp 34 is thus snap-fitted into the housing 43.

The clamp 34 is for example a spring made one-piece, in particular a sheet spring. The elastic retaining force of the clamp 34 is chosen so as to allow the intentional insertion or extraction of the fastening pin 35 into or out of the housing 43, and to prevent a disengagement of the fastening pin 35 from the clamp 34 merely under the effect of the upward force exerted by flow of coolant onto the bottom end-piece 3.

According to the invention, the clamp 34 is preferably made of material with high yield strength such as Ni-based super-alloy such as Inconel®, or Fe-based super-alloy or Ti alloy or even precipitation-hardened stainless-steel such as defined by AMS (Aerospace Material Specification) 5629 and 5643.

In all the described embodiments, the clamp 34 may be made one-piece.

The releasable complementary fasteners allow for a reliable attachment of the bundle unit 6 to the transition piece 16, and reduce the risks of a lifting-off of the bundle unit 6 from the transition piece 16 during operation of the nuclear reactor. They also allow for an easy separation of the bottom end-piece 3 from the transition piece 16, for example for servicing, since one only needs to pull on the bundle unit 6 from above. It is not necessary to access the area of junction between the transition piece 16 and the bottom end-piece 3 for detaching the bottom end-piece 3 from the transition piece 16 or for fastening these two parts together.

Thus, the operation of the nuclear fuel assembly is simple and induces reduced costs.

The releasable complementary fasteners further induce low additional costs, since the clamp 34 is simple to manufacture and can be assembled and secured to the bottom end-piece 3 in one operation, simply by snap-fitting into a housing 43 provided in the bottom end-piece 3.

The use of the releasable complementary fasteners on each fuel assembly 1 according to the invention further avoids having to increase the downward pressing force conventionally exerted on the fuel assemblies by upper core grid springs. Indeed, in the fuel assembly according to the invention, the retaining force exerted by the fasteners between the transition piece 16 and the bottom end-piece 3 of each fuel assembly 1 cooperates with the retaining force exerted by the leaf springs 13 and with the downward pressing force exerted by the upper core grid springs in order to equalize the lift-off forces due to the flow of coolant through the fuel assemblies.

The assembling of the nuclear fuel assembly 1 comprises the following successive steps:
- attachment of the fuel channel 10 to the transition piece 16, e.g. by screwing the fuel channel 10 to the transition piece 16 in order to form a "basket" ;
- assembling of the bundle unit 6 comprising the bottom end-piece 3, the top end-piece 4, the water channel 8 and the bundle of fuel rods 5;
- insertion of the bundle unit 6 into the fuel channel 10 and lowering of the bottom end-piece 3 towards the transition piece 16;
- fastening of the bottom end-piece 3 to the transition piece 16, in particular automatic engagement of the complementary fasteners as the bottom end-piece 3 is lowered onto the transition piece 16.

In the detailed description made with reference to the drawings, the female fasteners 28 are on the bottom end-piece 3 and the male fasteners 25 are on the transition piece 16.

The fuel assembly according to another embodiment differs from those described above only in that the female fasteners 28 are on the transition piece 16 and the male fasteners 25 on the bottom end-piece 3.

The transition piece 16 may also comprise some male fasteners 25 and some female fasteners 28, respectively engaging with female and male fasteners 28, 25 provided on the bottom end-piece 3.

## Claims

1. Nuclear fuel assembly (1) for a nuclear boiling water reactor comprising :
- a bottom end-piece (3), a top end-piece (4), a bundle of fuel rods (5) extending along a longitudinal direction (L) between the bottom end-piece (3) and the top end-piece (4);
- a fuel channel (10) surrounding the bundle of fuel rods (5) ; and
- a transition piece (16) extending the fuel channel (10) longitudinally downwardly for fitting into a lower core plate (2) of the nuclear boiling water reactor,
wherein the bottom end-piece (3) and the transition piece (16) comprise releasable complementary fasteners and are releasably fastened to one another through the releasable complementary fasteners,
and **characterized in that**
the releasable complementary fasteners are means for fixing by snap-fitting and comprise female fasteners (28) provided on one of the bottom end-piece (3) and the transition piece (16) and male fasteners (25) provided on the other one of the bottom end-piece (3) and the transition piece (16), each male fastener (35) engaging with a corresponding female fastener (28), and wherein
- each female fastener (28) comprises a housing (43) and a clamp (34), which is at least partially received in the housing (43), and
- each male fastener (25) comprises a retaining shoulder (41) ; and
- the clamp (34) of the female fastener (28) is elastically engaged onto the retaining shoulder (41) of the corresponding male fastener (25) in order to releasably fasten the bottom end-piece (3) to the transition piece (16).

2. Nuclear fuel assembly (1) according to claim 1, wherein the complementary releasable fasteners engage with each other when the transition piece (16) and the bottom end-piece (3) move one towards the other along the longitudinal direction (L).

3. Nuclear fuel assembly (1) according to claim 1 or 2, wherein the releasable complementary fasteners are provided on opposite faces of the transition piece (16) and the bottom end-piece (3).

4. Nuclear fuel assembly (1) according to any one of the preceding claims, wherein the clamp (34) is snap-fitted in the housing (43).

5. Nuclear fuel assembly (1) according to claim 4, wherein the clamp (34) comprises snap-fitting tabs (47) engaging with an internal shoulder (60) of the housing (43) in order to prevent a disengagement of the clamp (34) from the housing (43).

6. Nuclear fuel assembly (1) according to any one of the preceding claims, wherein the clamp (34) has a tubular body (45) and comprises retaining tabs (49) spaced angularly about a longitudinal axis (A) of the clamp (34) for engaging with the retaining shoulder (41) of the male fastener (25).

7. Nuclear fuel assembly (1) according to claim 6 taken in combination with claim 5, wherein the snap-fitting tabs (47) are distributed angularly about the longitudinal axis (A) of the clamp (34) and alternate with the retaining tabs (49) along a circumference of the clamp (34).

8. Nuclear fuel assembly (1) according to any one of the preceding claims, wherein the clamp is a U-shaped spring (34) having two legs (77) in snap-fit engagement with an internal shoulder (60) of the housing (43).

9. Nuclear fuel assembly (1) according to any one of the preceding claims, wherein the female fastener (28) is provided on the bottom end-piece (3) and the male fastener (25) is provided on the transition piece (16).

10. Nuclear fuel assembly (1) according to claim 9, wherein the housing (43) is in the bottom end-piece (3) and the male fastener (25) protrudes from a top surface (22) of the transition piece (16) towards the bottom end-piece (3).

11. Transition piece (16) for a nuclear fuel assembly (1) for a nuclear boiling water reactor, the nuclear fuel assembly (1) comprising :
- a bottom end-piece (3), a top end-piece (4), a bundle of fuel rods (5) extending along a longitudinal direction (L) between the bottom end-piece (3) and the top end-piece (4) ;
- a fuel channel (10) surrounding the bundle of fuel rods (5) ;
the transition piece (16) being arranged for extending the fuel channel (10) longitudinally downwardly for fitting into a lower core plate (2) of the nuclear boiling water reactor, and **characterized in that** the transition piece (16) comprises male fasteners (25), each male fastener (25) being adapted for snap-fittingly engaging with a corresponding female fastener (28) of the bottom end-piece (3) in order to fasten the bottom end-piece (3) to the transition piece (16), the male fastener (25) comprising a retaining shoulder (41) and the corresponding female fastener (28) comprising a housing (43) and a clamp (34) which is at least partially received in the housing (43), the clamp (34) being arranged to elastically engage onto the retaining shoulder (41) of the male fastener (25) in order to releasably fasten the bottom end-piece (3) to the transition piece (16).

## Patentansprüche

1. Nuklear-Brennstoff-Baugruppe (1) für einen Nuklear-Siedewasserreaktor, aufweisend:
- ein unteres Endstück (3), ein oberes Endstück (4), ein Bündel Brennstoffstäbe (5), die sich entlang einer Längsrichtung (L) zwischen dem unteren Endstück (3) und dem oberen Endstück (4) erstrecken,
- einen Brennstoff-Kanal (10), der das Bündel Brennstoffstäbe (5) umgibt, und
- ein Übergangsstück (16), das den Brennstoffkanal (10) in Längsrichtung nach unten verlängert zum Montieren in eine untere Kernplatte (2) des Nuklear-Siedewasserreaktors,
wobei das untere Endstück (3) und das Übergangsstück (16) lösbare komplementäre Verriegelungsteile aufweisen und mittels der lösbaren komplementären Verriegelungsteile aneinander verriegelt sind,
und **dadurch gekennzeichnet, dass**
die lösbaren komplementären Verriegelungsteile Mittel zum Fixieren mittels Einschnappens sind und aufweisen Buchse-Verriegelungsteile (28), die an einem von dem unteren Endstück (3) und dem Übergangsstück (16) bereitgestellt sind, und Stecker-Verriegelungsteile (25), die an dem anderen von dem unteren Endstück (3) und dem Übergangsstück (16) bereitgestellt sind, wobei jedes Stecker-Verriegelungsteil (35) mit einem korrespondierenden Buchse-Verriegelungsteil (28) in Eingriff steht, und wobei
- jedes Buchse-Verriegelungsteil (28) aufweist ein Gehäuse (43) und eine Klammer (34), welche zumindest teilweise in dem Gehäuse (43) aufgenommen ist, und
- jedes Stecker-Verriegelungsteil (25) eine Rückhalteschulter (41) aufweist und
- die Klammer (34) des Buchse-Verriegelungsteils (28) elastisch an der Rückhalteschulter (41) des korrespondierenden Stecker-Verriegelungsteils (25) angreift, um das untere Endstück (3) an dem Übergangsstück (16) lösbar zu verriegeln.

2. Nuklear-Brennstoff-Baugruppe (1) gemäß Anspruch 1, wobei die komplementären lösbaren Verriegelungsteile miteinander in Eingriff kommen, wenn sich das Übergangsstück (16) und das untere Endstück (3) entlang der Längsrichtung (L) aufeinanderzu bewegen.

3. Nuklear-Brennstoff-Baugruppe (1) gemäß Anspruch 1 oder 2, wobei die lösbaren komplementären Verriegelungsteile an gegenüberliegenden Seiten des Übergangsstücks (16) und des unteren Endstücks (3) bereitgestellt sind.

4. Nuklear-Brennstoff-Baugruppe (1) gemäß irgendeinem der vorhergehenden Ansprüche, wobei die Klammer (34) in das Gehäuse (43) eingeschnappt ist.

5. Nuklear-Brennstoff-Baugruppe (1) gemäß Anspruch 4, wobei die Klammer (34) Schnapp-Laschen (47) aufweist, die mit einer inneren Schulter (60) des Gehäuses (43) in Eingriff stehen, um ein Außer-Eingriff-Geraten der Klammer (34) aus dem Gehäuse (43) zu verhindern.

6. Nuklear-Brennstoff-Baugruppe (1) gemäß irgendeinem der vorhergehenden Ansprüche, wobei die Klammer (34) einen rohrförmigen Körper (45) hat und Rückhaltelaschen (49) aufweist, die im Winkelabstand um eine Längsachse (A) der Klammer (34) herum angeordnet sind zum In-Eingriff-Stehen mit der Rückhalteschulter (41) des Stecker-Verriegelungsteils (25).

7. Nuklear-Brennstoff-Baugruppe (1) gemäß Anspruch 6 in Kombination mit Anspruch 5, wobei die Schnapp-Laschen (47) um die Längsachse (A) der Klammer (34) herum winkelverteilt sind und entlang eines Umfangs der Klammer (34) mit den Rückhaltelaschen (49) alternieren.

8. Nuklear-Brennstoff-Baugruppe (1) gemäß irgendeinem der vorhergehenden Ansprüche, wobei die Klammer eine U-förmige Feder (34) ist, die zwei Schenkel (77) hat, die in SchnappEingriff mit einer inneren Schulter (60) des Gehäuses (43) stehen.

9. Nuklear-Brennstoff-Baugruppe (1) gemäß irgendeinem der vorhergehenden Ansprüche, wobei das Buchse-Verriegelungsteil (28) an dem unteren Endstück (3) bereitgestellt ist und das Stecker-Verschlussteil (25) an dem Übergangsstück (16) bereitgestellt ist.

10. Nuklear-Brennstoff-Baugruppe (1) gemäß Anspruch 9, wobei das Gehäuse (43) in dem unteren Endstück (3) ist und das Stecker-Verriegelungsteil (25) aus der oberen Fläche (22) des Übergangsstücks (16) zu dem unteren Endstück (3) hin vorsteht.

11. Übergangsstück (16) für eine Nuklear-Brennstoff-Baugruppe (1) für einen Nuklear-Siedewasserreaktor, wobei die Nuklear-Brennstoff-Baugruppe (1) aufweist:
- ein unteres Endstück (3), ein oberes Endstück (4), ein Bündel Brennstoffstäbe (5), die sich entlang einer Längsrichtung (L) zwischen dem unteren Endstück (3) und dem oberen Endstück (4) erstrecken,
- einen Brennstoff-Kanal (10), der das Bündel Brennstoffstäbe (5) umgibt,
wobei das Übergangsstück (16) angeordnet ist, um den Brennstoffkanal (10) in Längsrichtung nach unten zu verlängern zum Montieren in eine untere Kernplatte (2) des Nuklear-Siedewasserreaktors, und
**dadurch gekennzeichnet, dass** das Übergangsstück (16) Stecker-Verriegelungsteile (25) aufweist, wobei jedes Stecker-Verriegelungsteil (25) angepasst ist zum In-SchnappeingriffStehen mit einem korrespondierenden Buchse-Verriegelungsteil (28) des unteren Endstücks (3), um das untere Endstück (3) an dem Übergangsstück (16) zu verriegeln, wobei das Stecker-Verriegelungsteil (25) eine Rückhalteschulter (41) aufweist und das korrespondierende Buchse-Verriegelungsteil (28) ein Gehäuse (43) und eine Klammer (34) aufweist, welche zumindest teilweise in dem Gehäuse (43) aufgenommen ist, wobei die Klammer (34) angeordnet ist, um elastisch an der Rückhalteschulter (41) des Stecker-Verriegelungsteils (25) anzugreifen, um das untere Endstück (3) an dem Übergangsstück (16) lösbar zu verriegeln.

## Revendications

1. Assemblage de combustible nucléaire (1) pour un réacteur nucléaire à eau bouillante comprenant :
une pièce d'extrémité inférieure (3), une pièce d'extrémité supérieure (4), un faisceau de crayons combustibles (5) s'étendant le long d'une direction longitudinale (L) entre la pièce d'extrémité inférieure (3) et la pièce d'extrémité supérieure (4) ;
un canal de combustible (10) entourant le faisceau de crayons combustibles (5) ; et
une pièce de transition (16) étendant le canal de combustible (10) longitudinalement vers le bas pour venir se placer dans une plaque de coeur inférieure (2) du réacteur nucléaire à eau bouillante,
dans lequel la pièce d'extrémité inférieure (3) et la pièce de transition (16) comprennent des fixations complémentaires amovibles et sont fixées de manière amovible l'une à l'autre au moyen des fixations complémentaires amovibles,
et **caractérisé en ce que** :
les fixations complémentaires amovibles sont des moyens de fixation par encliquetage et comprennent des fixations femelles (28) prévues sur l'une des pièces d'extrémité inférieures (3) et la pièce de transition (16) et des fixations mâles (25) prévues sur l'autre pièce d'extrémité inférieure (3) et la pièce de transition (16), chaque fixation mâle (35) se mettant en prise avec une fixation femelle (28) correspondante, et dans lequel :
chaque fixation femelle (28) comprend un boîtier (43) et une pince (34), qui est au moins partiellement logée dans le boîtier (43), et
chaque fixation mâle (25) comprend un épaulement de retenue (41) ; et
la pince (34) de la fixation femelle (28) est élastiquement mise en prise sur l'épaulement de retenue (41) de la fixation mâle (25) correspondante afin de fixer de manière amovible la pièce d'extrémité inférieure (3) à la pièce de transition (16).

2. Assemblage de combustible nucléaire (1) selon la revendication 1, dans lequel les fixations complémentaires amovibles se mettent en prise entre elles lorsque la pièce de transition (16) et la pièce d'extrémité inférieure (3) se déplacent l'une vers l'autre le long de la direction longitudinale (L).

3. Assemblage de combustible nucléaire (1) selon la revendication 1 ou 2, dans lequel les fixations complémentaires amovibles sont prévues sur des faces opposées de la pièce de transition (16) et la pièce d'extrémité inférieure (3).

4. Assemblage de combustible nucléaire (1) selon l'une quelconque des revendications précédentes, dans lequel la pince (34) est encliquetée dans le boîtier (43).

5. Assemblage de combustible nucléaire (1) selon la revendication 4, dans lequel la pince (34) comprend des languettes d'encliquetage (47) se mettant en prise avec un épaulement interne (60) du boîtier (43) afin d'empêcher que la pince (34) ne se dégage du boîtier (43).

6. Assemblage de combustible nucléaire (1) selon l'une quelconque des revendications précédentes, dans lequel la pince (34) a un corps tubulaire (45) et comprend des languettes de retenue (49) espacées, de manière angulaire, autour d'un axe longitudinal (A) de la pince (34) pour se mettre en prise avec l'épaulement de retenue (41) de la fixation mâle (25).

7. Assemblage de combustible nucléaire (1) selon la revendication 6, combinée à la revendication 5, dans lequel les languettes d'encliquetage (47) sont réparties, de manière angulaire, autour de l'axe longitudinal (A) de la pince (34) et alternent avec les languettes de retenue (49) le long d'une circonférence de la pince (34).

8. Assemblage de combustible nucléaire (1) selon l'une quelconque des revendications précédentes, dans lequel la pince est un ressort en forme de U (34) ayant deux pattes (77) qui se mettent en prise pour l'encliquetage avec un épaulement interne (60) du boîtier (43).

9. Assemblage de combustible nucléaire (1) selon l'une quelconque des revendications précédentes, dans lequel la fixation femelle (28) est prévue sur la pièce d'extrémité inférieure (3) et la fixation mâle (25) est prévue sur la pièce de transition (16).

10. Assemblage de combustible nucléaire (1) selon la revendication 9, dans lequel le boîtier (43) est dans la pièce d'extrémité inférieure (3) et la fixation mâle (25) fait saillie à partir d'une surface supérieure (22) de la pièce de transition (16) vers la pièce d'extrémité inférieure (3).

11. Pièce de transition (16) pour un assemblage de combustible nucléaire (1) pour un réacteur nucléaire à eau bouillante, l'assemblage de combustible nucléaire (1) comprenant :
une pièce d'extrémité inférieure (3), une pièce d'extrémité supérieure (4), un faisceau de crayons combustibles (5) s'étendant le long d'une direction longitudinale (L) entre la pièce d'extrémité inférieure (3) et la pièce d'extrémité supérieure (4) ;
un canal de combustible (10) entourant le faisceau de crayons combustibles (5) ;
la pièce de transition (16) étant agencée pour étendre le canal de combustible (10) longitudinalement vers le bas pour venir se placer dans une plaque de coeur inférieure (2) du réacteur nucléaire à eau bouillante, et **caractérisé en ce que** la pièce de transition (16) comprend des fixations mâles (25), chaque fixation mâle (25) étant adaptée pour se mettre en prise par encliquetage avec une fixation femelle (28) correspondante de la pièce d'extrémité inférieure (3) afin de fixer la pièce d'extrémité inférieure (3) à la pièce de transition (16), la fixation mâle (25) comprenant un épaulement de retenue (41) et la fixation femelle (28) correspondante comprenant un boîtier (43) et une pince (34) qui est au moins partiellement logée dans le boîtier (43), la pince (34) étant agencée pour se mettre en prise, élastiquement, sur l'épaulement de retenue (41) de la fixation mâle (25) afin de fixer de manière amovible la pièce d'extrémité inférieure (3) à la pièce de transition (16).
